# EUROPÄISCHE PATENTSCHRIFT

(11) **EP 3 259 491 B1**
(45) Veröffentlichungstag und Bekanntmachung des Hinweises auf die Patenterteilung: **26.12.2018**
(21) Anmeldenummer: 16705204.2
(22) Anmeldetag: 19.02.2016
(51) Int. Cl.: F16G 13/16, F16H 7/18, H02G 3/04, H02G 11/00

(54) **ENERGIEFÜHRUNGSKETTE FÜR EINE BEARBEITUNGSMASCHINE ZUR WERKSTÜCKBEARBEITUNG**
CABLE CARRIER FOR A MACHINE TOOL FOR MACHINING WORKPIECES
CHAÎNE DE TRANSMISSION D'ÉNERGIE POUR MACHINE D'USINAGE DE PIÈCES

(30) Priorität: 20.02.2015 DE 102015203073
(43) Veröffentlichungstag der Anmeldung: 27.12.2017
(73) Patentinhaber: Trumpf Laser- und Systemtechnik GmbH, 71254 Ditzingen (DE)
(72) Erfinder: BLASER, Martin, 88267 Vogt (DE); FISCHER, Gunter, 71297 Moensheim (DE); MUELLER, Joerg, 75233 Tiefenbronn (DE)
(74) Vertreter: Kohler Schmid Möbus Patentanwälte
(86) Internationale Anmeldenummer: PCT/EP2016/053565
(87) Internationale Veröffentlichungsnummer: WO 2016/131964

(56) Entgegenhaltungen:
- EP-A2- 0 192 853
- DE-C1- 3 537 961
- DE-U1- 7 624 623
- DE-U1- 20 101 656
- US-A1- 2013 075 129

## Beschreibung

Die Erfindung betrifft eine Energieführungskette mit mehreren miteinander gelenkig verbundenen Kettengliedern, wobei eine der beiden Seiten der Energieführungskette mit einem elastisch biegbaren Abdeckband abgedeckt ist, das zumindest an einigen, vorzugsweise an allen inneren Kettengliedern gehalten und in Kettenlängsrichtung verschiebbar geführt ist, sowie auch eine Maschine, insbesondere eine Bearbeitungsmaschine zur Werkstückbearbeitung, mit einer entlang einer Führungsrinne verfahrbaren Maschinenkomponente und mit mindestens einer, insbesondere U-förmig, umgebogenen Energieführungskette, die die verfahrbare Maschinenkomponente mit einer anderen Maschinenkomponente verbindet und zumindest teilweise in der Führungsrinne ablegbar ist.

Eine derartige Energieführungskette ist beispielsweise durch die EP 0 192 853 A2 bekannt geworden.

Energieführungsketten mit Stahlbandabdeckung werden beispielsweise von der Fa. TSUBAKI KABELSCHLEPP GmbH, D-57482 Wenden-Gerlingen, vertrieben. Das Stahlband ist jeweils zwischen zwei Seitenwänden der Kettenglieder geführt und über nach innen stehende Haltelaschen der Seitenwände auf den Kettengliedern gehalten.

Energieführungsketten dienen zur Führung von flexiblen Versorgungsleitungen, wie z.B. elektrischen Kabeln und pneumatischen oder hydraulischen Leitungen, einer bewegten Maschinenkomponente. Die Energieführungsketten können zumindest teilweise in einer Führungsrinne aufgenommen bzw. abgelegt sein, die beispielsweise in den Boden bzw. in ein Fundament unterhalb der bewegten Maschinenkomponente eingelassen ist (so genannte Unterflurrinne).

Es sind Energieführungsketten bekannt, die komplett unterflur verbaut und durch eine Abdeckung geschützt bzw. gekapselt sind. Nur die Medienführung wird zur bewegten Maschinenkomponente durch eine Bodenöffnung geführt, wobei der offene Durchbruch zur Energieführungskette, die unter der Abdeckung liegt, relativ klein ist und z.B. durch Bürsten geschlossen werden kann. Allerdings wird für eine solche unterflur verbaute Energieführungskette ein tiefes und voluminöses Fundament benötigt. Bei Energieführungsketten die unterflur bzw. im Boden ganz oder teilweise versenkt verbaut werden, besteht die Gefahr, dass sich in der Führungsrinne Dreck ansammelt, der zu Funktionsstörungen und Beschädigungen führt. Bei Einsatz in Laser-Bearbeitungsmaschinen besteht die Gefahr, dass Laserstrahlung durch die Lücke zwischen Energieführungskette und deren Führungsrinne in einen abzusichernden Bereich austritt, wenn die Führungsrinne beim Übergang zum abzusichernden Bereich nicht auf ganzer Breite durch eine Abdeckung geschlossen ist.

Die aus der EP 0 192 853 A2 bekannte Energieführungskette wird zwischen einem ortsfesten Anschluss und einem beweglichen Verbraucher angeordnet und weist eine Vielzahl von Kettengliedern auf, die aus einem einteilig und formstabil ausgebildeten, U-förmigen Aufnahmeteil bestehen, dessen mit einer Traverse verbundene Schenkel die Laschen der Kettenglieder bilden und mit Anschlägen zur Begrenzung des gegenseitigen Schwenkwinkels versehen sind. An den freien Enden der Laschen sind nach innen vorspringende Halteelemente angeordnet, und zwischen diese Halteelemente ist ein flexibles Abdeckband eingezogen, welches die Öffnungen der U-förmigen Aufnahmeteile freitragend überspannt. Die Halteelemente sind als mit einem Schlitz versehene Vorsprünge ausgebildet, in die das Abdeckband eingreift.

Der vorliegenden Erfindung liegt daher die Aufgabe zugrunde, eine Energieführungskette der eingangs genannten Art derart weiterzubilden, dass die vorgenannten Nachteile überwunden werden, sowie eine zugehörige Maschine anzugeben. Insbesondere soll bei einer abgelegten Energieführungskette die Gefahr des Austritts von Laserstrahlung minimiert, die Verschmutzungsgefahr verringert und die Begehbarkeit sowie Überfahrbarkeit der Führungsrinne verbessert werden.

Diese Aufgabe wird erfindungsgemäß dadurch gelöst, dass das Abdeckband in Kettenquerrichtung mindestens auf einer Seite, insbesondere beidseitig, über die Kettenglieder übersteht.

Durch den erfindungsgemäßen seitlichen Überstand des Abdeckbandes kann ein zwischen abgelegter Energieführungskette und Führungsrinne befindlicher Spalt zumindest teilweise (zumindest im Bereich von darüber liegenden Umhausungswänden / Türen), vorzugsweise vollständig abgedeckt werden, wodurch die Verschmutzungsgefahr weiter verringert und die Lasersicherheit weiter verbessert werden.

Bei einer besonders bevorzugten Ausführungsform der Erfindung sind zumindest an den inneren Kettengliedern Führungselemente befestigt, insbesondere verrastet, an denen das Abdeckband sowohl gehalten als auch in Kettenlängsrichtung verschiebbar geführt ist. Die Führungselemente stehen vorzugsweise in Kettenquerrichtung beidseitig über die Kettenglieder über und umgreifen die Längskanten des Abdeckbandes, das dadurch in Kettenlängsrichtung geführt ist. Umgekehrt können aber auch an der Unterseite des Abdeckbands Führungselemente angebracht (geschweißt, geklebt, genietet, geschraubt...) sein oder durch Biegelaschen aus dem Abdeckband selbst gebildet sein, die jeweils eine Führungskante der Kettenglieder untergreifen. Die Führungselemente gewährleisten eine ausreichende Unterstützung des Abdeckbandes (Anbindung / Fixierung von Abdeckband zu Kette) und eine ausreichende Trittfestigkeit des Abdeckband und der Energieführungskette. Alternativ kann das Abdeckband auch mittels Magneten oder Unterdruckelementen an den Kettengliedern gehalten sein, oder das Abdeckband selbst kann magnetisch sein.

Die Energieführungskette liegt entweder auf dem Boden der Führungsrinne auf oder ist in der Führungsrinne hängend über beidseitig vorstehende Randvorsprünge ihrer Kettenglieder gehalten.

Die Erfindung betrifft auch eine eingangs genannte Maschine mit mindestens einer erfindungsgemäßen Energieführungskette, wobei die mit dem Abdeckband abgedeckte Seite die Innenseite der umgebogenen Energieführungskette bildet und das Abdeckband mindestens so breit wie die Führungsrinne ist. Durch das durchgängige Abdeckband der abgelegten Energieführungskette ist die Führungsrinne geschlossen, wodurch die Lasersicherheit bei gleichzeitig guter Begehbarkeit bzw. Überfahrbarkeit verbessert ist.

Besonders bevorzugt erstreckt sich das Abdeckband der abgelegten Energieführungskette in Kettenquerrichtung beidseitig über die Führungsrinne hinaus, um so auch die zwischen abgelegter Energieführungskette und Führungsrinne jeweils befindlichen Spalte vollständig abzudecken und dadurch die Verschmutzungsgefahr weiter zu verringern und die Lasersicherheit weiter zu verbessern.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Die Figuren der Zeichnung zeigen den erfindungsgemäßen Gegenstand stark schematisiert und sind nicht maßstäblich zu verstehen.

Es zeigen:
- Fign. 1a-1c: eine U-förmig umgebogene erfindungsgemäße Energieführungskette mit einem Abdeckband in einer perspektivischen Ansicht (Fig. 1a), in einer Seitenansicht (Fig. 1b) und in einer Draufsicht (Fig. 1c);
- Fig. 2: die ausgerollte Energieführungskette mit noch nicht montiertem Abdeckband in einer Draufsicht;
- Fign. 3a, 3b: eine Draufsicht (Fig. 3a) und eine Seitenansicht (Fig. 3b) eines in Fig. 2 gezeigten Führungselements;
- Fig. 4: schematisch eine Bearbeitungsmaschine mit einer entlang einer Führungsrinne verfahrbaren Maschinenkomponente und mit zwei in der Führungsrinne ablegbaren Energieführungsketten; und
- Fign. 5a, 5b: eine auf dem Grund der Führungsrinne aufliegende Energieführungskette (Fig. 5a) und eine an der Führungsrinne hängend gehaltene Energieführungskette (Fig. 5b), jeweils in einer Querschnittansicht gemäß V-V in Fig. 4.

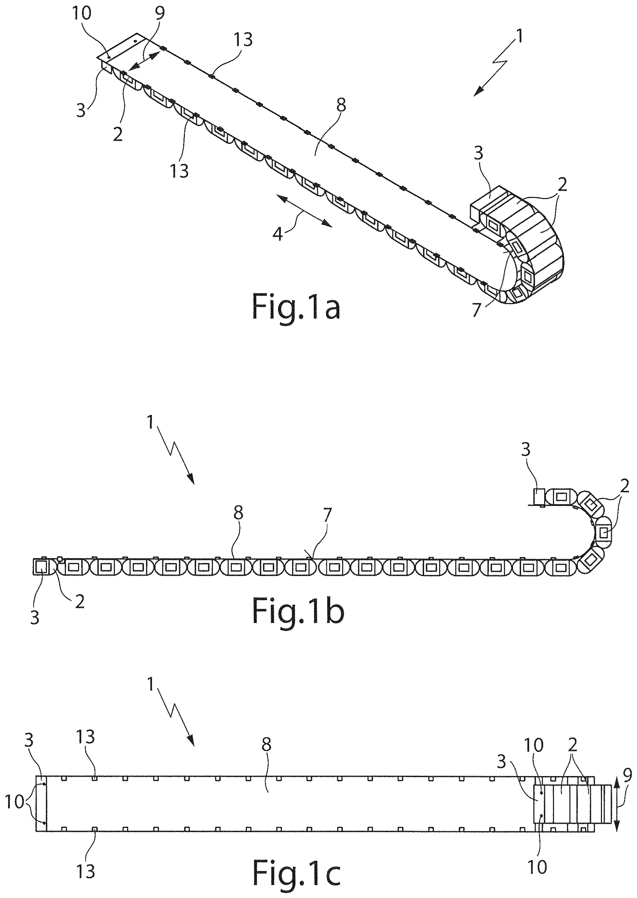

Die in Fig. 1 gezeigte Energieführungskette 1 dient zur Führung von flexiblen Versorgungsleitungen, wie z.B. elektrischen Kabeln und pneumatischen oder hydraulischen Leitungen, eines bewegten Maschinenteils.

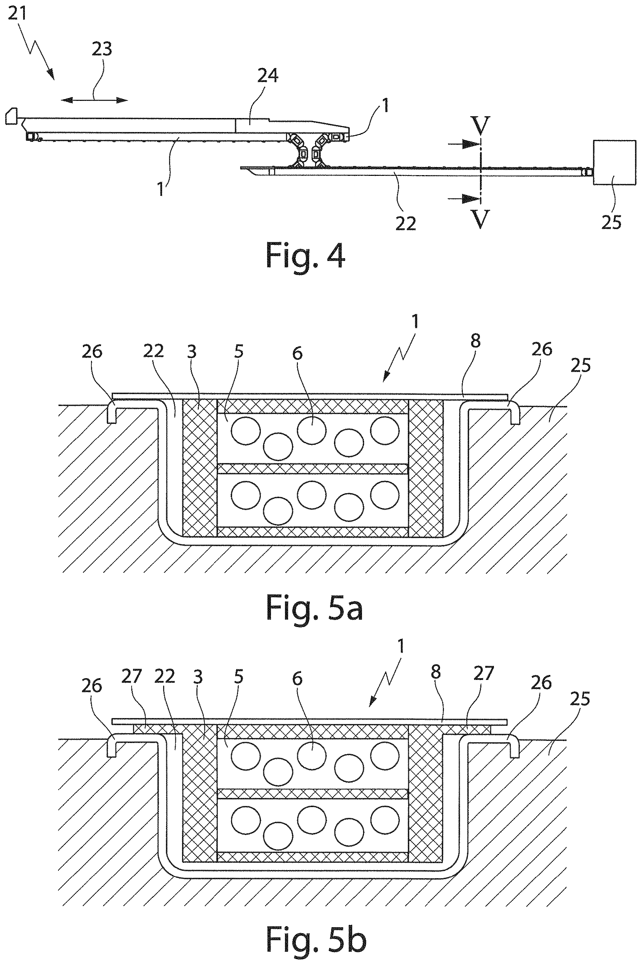

Die Energieführungskette 1 umfasst mehrere miteinander gelenkig verbundene Kettenglieder 2, 3, die jeweils ein in Kettenlängsrichtung 4 offenes Hohlprofil 5 (Fign. 5a, 5b) aufweisen, in denen die Versorgungsleitungen 6 in Kettenlängsrichtung 4 geführt sind. Die beiden äußersten Kettenglieder sind mit 3 und die dazwischenliegenden inneren Kettenglieder mit 2 bezeichnet.

Eine der beiden Seiten, nämlich die Innenseite 7 der in Fig. 1 U-förmig umgebogenen Energieführungskette 1 ist mit einem elastisch biegbaren Abdeckband 8, z.B. in Form eines Federstahlbandes, abgedeckt, das an allen inneren Kettengliedern 2 sowohl gehalten als auch in Kettenlängsrichtung 4 verschiebbar geführt ist. Diese Führung muss so ausgeführt sein, dass eine Relativbewegung des Abdeckbandes 8 entlang der Energieführungskette 1 möglich ist, denn das außerhalb der neutralen Faser der Energieführungskette 1 befestigte Abdeckband 8 muss sich im Übergang zum Biegeradius relativ zur Energieführungskette 1 bewegen können. Die Gesamtlänge der Innenseite 7 bleibt unverändert, weswegen eine Fixierung des Abdeckbandes 8 an den beiden äußersten Kettengliedern 3 möglich ist. Diese Fixierung kann beispielsweise über Schrauben oder Niete 10 erfolgen. Alternativ kann das Abdeckband 8 auch nur an einem der beiden äußersten Kettenglieder 3 oder aber, sofern das Abdeckband 8 zwischen Endanschlägen der äußersten Kettenglieder 3 frei verschiebbar ist, nicht fixiert sein. Wie besonders deutlich in Fig. 1c gezeigt, steht das Abdeckband 8 in Kettenquerrichtung 9 beidseitig über die Kettenglieder 2, 3 über. Alternativ kann das Abdeckband 8 in Kettenrichtung 9 auch nur auf einer Seite über die Kettenglieder 2, 3 überstehen.

Zumindest bei Einsatz in einer Laserbearbeitungsmaschine besteht das Abdeckband 8 aus laserlichtbeständigem Material.

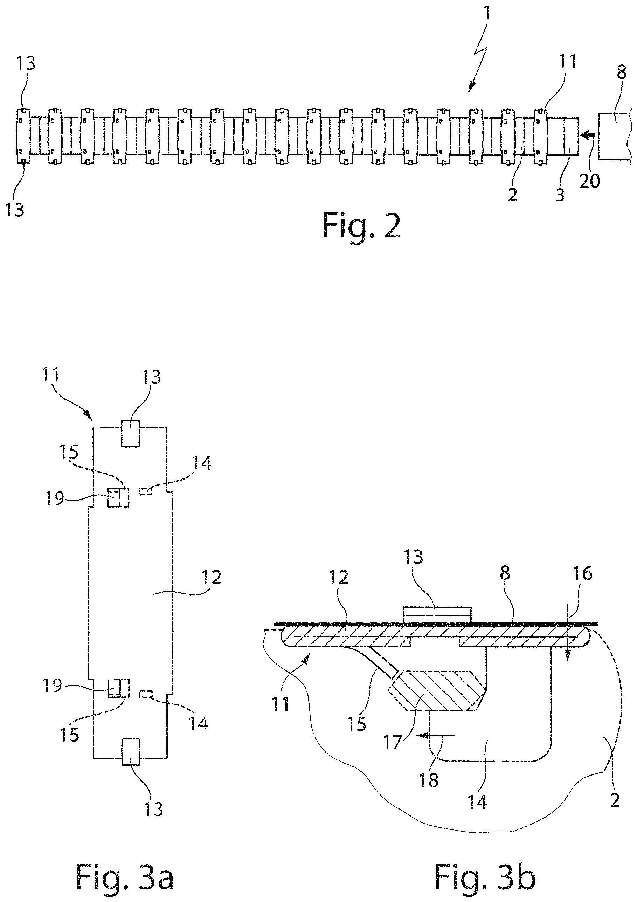

Wie in Fig. 2 gezeigt, sind an den inneren Kettengliedern 2 Führungselemente 11 befestigt, an denen das Abdeckband 8 gehalten und in Kettenlängsrichtung 4 verschiebbar geführt ist. Wie in Fign. 3a, 3b gezeigt, weist das Führungselement 11 einen Bodenabschnitt 12 zur Auflage auf einem Kettenglied 2 und an den in Kettenquerrichtung 9 beiden Enden des Bodenabschnitts 12 nach oben umgebogene Haltelaschen 13 auf, die den Bodenabschnitt 12 übergreifen. Außerdem weist das Führungselement 11 zwei in Kettenquerrichtung 9 voneinander beabstandete untere Haken 14 und zwei nach unten abstehende Fixierlaschen 15 auf, die jeweils den Hakenöffnungen der Haken 13 zugewandt sind. Das Führungselement 11 kann aus einem flachen Blechzuschnitt hergestellt sein, indem freigeschnittene Laschen des Blechzuschnitts zu den Haltelaschen 13 umgebogen und zu den Haken 14 und Fixierlaschen 15 abgewinkelt werden. Alternativ kann das Führungselement 11 auch ein Gussteil aus Metall oder Kunststoff sein. In jedem Fall gewährleisten die Führungselemente 11 eine ausreichende Unterstützung des Abdeckbandes 8 und eine ausreichende Trittfestigkeit von Abdeckband 8 und Energieführungskette 1.

Wie in Fig. 3b gezeigt, wird das Führungselement 11 mit seinen beiden Haken 14 in Pfeilrichtung 16 von oben neben einem Querrohr 17 des Kettenglieds 2 in das Kettenglied 2 eingeführt, bis der Bodenabschnitt 12 auf dem Kettenglied 2 aufliegt und die Fixierlaschen 15 an dem Querrohr 17 nach oben ausgelenkt sind. Anschließend wird das Führungselement 11 auf dem Kettenglied 2 in Pfeilrichtung 18 geschoben, bis die Haken 14 am Querrohr 17 anliegen und die Fixierlaschen 15 hinter dem Querrohr 17 verrastet sind. Das Führungselement 11 ist nun auf dem Querrohr 17 befestigt. Zum Lösen des Führungselements 11 werden die Fixierlaschen 15 mittels eines geeigneten Werkzeugs, welches durch Aussparungen 19 des Bodenabschnitts 12 hindurch bis unter die Fixierlaschen 14 eingeführt wird, angehoben und dadurch entrastet.

Nachdem die Führungselemente 11 an allen inneren Kettengliedern 2 befestigt sind, wird das Abdeckband 8 über eines der beiden Kettenenden jeweils zwischen Bodenabschnitt 12 und Haltelaschen 13 auf alle Führungselemente 11 aufgeschoben, wie in Fig. 2 durch den Pfeil 20 angedeutet ist. Abschließend wird das Abdeckband 8 an den beiden äußersten Kettengliedern 3 mittels Schrauben oder Nieten 10 unverschiebbar fixiert.

Die in Fig. 4 gezeigte Maschine 21 umfasst eine entlang einer geraden Führungsrinne 22 horizontal (Pfeilrichtung 23) verfahrbare Maschinenkomponente 24 mit zwei U-förmig umgebogenen Energieführungsketten 1, von denen eine mit einer stationären Maschinenkomponente (z.B. Versorgungsquelle) 25 verbunden ist und die andere nur zum Füllen und Abdecken der Führungsrinne 22 dient. Bei der Maschine 21 kann es sich um eine Bearbeitungsmaschine zur Werkstückbearbeitung, wie z.B. eine Laserbearbeitungsmaschine, handeln. Die eine Energieführungskette 1 ist an dem in Fig. 4 linken Ende und die andere Energieführungskette 1 an dem in Fig. 4 rechten Ende der verfahrbaren Maschinenkomponente 24 befestigt. Die verfahrbare Maschinenkomponente 24 ist beispielsweise ein Schlitten mit Rollen, die in der Führungsrinne 22 geführt sind. Die beiden Energieführungsketten 1 werden in der Führungsrinne 22 gegenläufig abgelegt, wobei in Abhängigkeit von der aktuellen Verfahrstellung der verfahrbaren Maschinenkomponente 24 größere oder kleinere Teile der Energieführungsketten 1 in der Führungsrinne 22 abgelegt sind.

In Fig. 5a ist ein Querschnitt durch ein in die Führungsrinne 22 abgelegtes Kettenglied 3 gezeigt, wobei die Führungsrinne 22 beispielhaft als ein in einem Boden 25 verlegtes Schienenprofil dargestellt ist. Die Führungsrinne 22 ist höchstens so tief, wie die Kettenglieder 3 hoch sind, so dass das abgelegte Kettenglied 3 auf dem Boden der Führungsrinne 22 aufliegt. Die mit dem Abdeckband 8 abgedeckte Innenseite der U-förmig umgebogenen Energieführungskette 1 bildet die Oberseite des abgelegten Kettengliedes 3. Das Abdeckband 8 erstreckt sich beidseitig über die Führungsrinne 22 hinaus, um so auch die zwischen abgelegter Energieführungskette 1 und Führungsrinne 22 jeweils befindlichen Spalte abzudecken, wodurch die Verschmutzungsgefahr weiter verringert und die Lasersicherheit weiter verbessert wird. Falls das Abdeckband 8 statt beidseitig nur auf einer Seite über die Kettenglieder 2, 3 übersteht, kann nur einer der beiden Spalte abgedeckt werden. Wie in Fig. 5a gezeigt, liegt das Abdeckband 8 auf Schultern 26 der Führungsrinne 22 auf. Das Abdeckband 8 stellt eine trittfeste Abdeckung der abgelegten Energieführungskette 1 dar und verhindert, dass Laserstrahlung aus dem Bearbeitungsraum durch die Führungsrinne 22 ungehindert in einen zu sichernden Bereich austritt.

Wie in Fig. 5b gezeigt, können die Kettenglieder 3 auch beidseitig überstehende Randvorsprünge 27 aufweisen, an denen das abgelegte Kettenglied 3 auf den Schultern 26 der Führungsrinne 3 hängend gehalten ist. Auch hier erstreckt sich das Abdeckband 8 beidseitig über die Führungsrinne 22 hinaus, um eine trittfeste Abdeckung der abgelegten Energieführungskette 1 auszubilden und zu verhindern, dass Laserstrahlung aus dem Bearbeitungsraum durch die Führungsrinne 22 ungehindert in einen zu sichernden Bereich austritt.

## Patentansprüche

1. Energieführungskette (1) mit mehreren miteinander gelenkig verbundenen Kettengliedern (2, 3), wobei eine der beiden Seiten der Energieführungskette (1) mit einem elastisch biegbaren Abdeckband (8) abgedeckt ist, das zumindest an einigen, vorzugsweise an allen inneren Kettengliedern (2) gehalten und in Kettenlängsrichtung (4) verschiebbar geführt ist,
**dadurch gekennzeichnet,**
**dass** das Abdeckband (8) in Kettenquerrichtung (9) mindestens auf einer Seite, insbesondere beidseitig, über die Kettenglieder (2, 3) übersteht.

2. Energieführungskette nach Anspruch 1, **dadurch gekennzeichnet, dass** das Abdeckband (8) laserlichtbeständig ist.

3. Energieführungskette nach Anspruch 1 oder 2, **dadurch gekennzeichnet, dass** das Abdeckband (8) durch ein Federstahlband gebildet ist.

4. Energieführungskette nach einem der vorhergehenden Ansprüche, **dadurch gekennzeichnet, dass** zumindest an den inneren Kettengliedern (2) Führungselemente (11) befestigt, insbesondere verrastet sind, an denen das Abdeckband (8) sowohl gehalten als auch in Kettenlängsrichtung (4) verschiebbar geführt ist.

5. Energieführungskette nach Anspruch 4, **dadurch gekennzeichnet, dass** die Führungselemente (11) in Kettenquerrichtung (9) beidseitig über die Kettenglieder (2, 3) überstehen und die Längskanten des Abdeckbandes (8) umgreifen.

6. Energieführungskette nach einem der vorhergehenden Ansprüche, **dadurch gekennzeichnet, dass** die Kettenglieder (2, 3) in Kettenquerrichtung (9) beidseitig jeweils vorstehende Randvorsprünge (27) zur hängenden Auflage auf Schultern (26) einer Führungsrinne (22) aufweisen.

7. Energieführungskette nach einem der vorhergehenden Ansprüche, **dadurch gekennzeichnet, dass** die Kettenglieder (2, 3) jeweils ein in Kettenlängsrichtung (4) offenes Hohlprofil (5) aufweisen, entlang denen Versorgungsleitungen (6) in Kettenlängsrichtung (4) geführt sind.

8. Maschine, insbesondere Bearbeitungsmaschine (21) zur Werkstückbearbeitung, mit einer entlang einer Führungsrinne (22) verfahrbaren Maschinenkomponente (24) und mit mindestens einer, insbesondere U-förmig, umgebogenen Energieführungskette (1) nach einem der vorhergehenden Ansprüche, die die verfahrbare Maschinenkomponente (24) mit einer anderen Maschinenkomponente (25) verbindet und zumindest teilweise in der Führungsrinne (22) ablegbar ist, wobei die mit dem Abdeckband (8) abgedeckte Seite die Innenseite (7) der umgebogenen Energieführungskette (1) bildet und das Abdeckband (8) mindestens so breit wie die Führungsrinne (22) ist.

9. Bearbeitungsmaschine nach Anspruch 8, **dadurch gekennzeichnet, dass** sich das Abdeckband (8) der abgelegten Energieführungskette (1) in Kettenquerrichtung (9) beidseitig über die Führungsrinne (22) hinaus erstreckt und insbesondere auf Schultern (26) der Führungsrinne (22) aufliegt.

10. Bearbeitungsmaschine nach Anspruch 8 oder 9, **dadurch gekennzeichnet, dass** die Kettenglieder (2, 3) in Kettenquerrichtung (9) beidseitig jeweils vorstehende Randvorsprünge (27) aufweisen, mit denen die abgelegte Energieführungskette (1) auf Schultern (26) der Führungsrinne (22) aufliegt, insbesondere hängend gehalten ist.

11. Bearbeitungsmaschine nach einem der Ansprüche 8 bis 10, **dadurch gekennzeichnet, dass** die abgelegte Energieführungskette (1) auf dem Boden der Führungsrinne (22) aufliegt.

## Claims

1. Energy guide chain (1) comprising a plurality of articulately interconnected chain links (2, 3), wherein one of the two sides of the energy guide chain (1) is covered with an elastically bendable cover strip (8), which is held at least on some, preferably on all inner chain links (2), and is guided displaceably in the chain longitudinal direction (4),
**characterized in that**, in the chain transverse direction (9), the cover strip (8) projects at least on one side, in particular on both sides, over the chain links (2, 3).

2. Energy guide chain according to claim 1, **characterized in that** the cover strip (8) is laser-light-resistant.

3. Energy guide chain according to claim 1 or 2, **characterized in that** the cover strip (8) is formed by a spring steel strip.

4. Energy guide chain according to one of the preceding claims, **characterized in that** guide elements (11) are fastened, in particular latched, at least to the inner chain links (2), by which the cover strip (8) is held and also displaceably guided in the chain longitudinal direction (4).

5. Energy guide chain according to claim 4, **characterized in that**, in the chain transverse direction (9), the guide elements (11) project on both sides over the chain links (2, 3) and encompass the longitudinal edges of the cover strip (8).

6. Energy guide chain according to one of the preceding claims, **characterized in that**, in the chain transverse direction (9), the chain links (2, 3) have on both sides respectively protruding marginal projections (27) for suspended support on shoulders (26) of a guide trough (22).

7. Energy guide chain according to one of the preceding claims, **characterized in that** the chain links (2, 3) have each a hollow profile (5) which is open in the chain longitudinal direction (4) and along which supply lines (6) are guided in the chain longitudinal direction (4).

8. Machine, in particular a processing machine (21) for the machining of workpieces, comprising a machine component (24) traversable along a guide trough (22) and at least one energy guide chain (1), which is bent over, in particular in a U-shape, according to one of the preceding claims, which energy guide chain connects the traversable machine component (24) to another machine component (25) and can be laid down at least partially in the guide trough (22), wherein the side covered with the cover strip (8) forms the inner side (7) of the bent-over energy guide chain (1) and the cover strip (8) is at least as wide as the guide trough (22).

9. Processing machine according to claim 8, **characterized in that** the cover strip (8) of the laid-down energy guide chain (1) extends in the chain transverse direction (9) on both sides beyond the guide trough (22), and in particular rests on shoulders (26) of the guide trough (22).

10. Processing machine according to claim 8 or 9, **characterized in that** the chain links (2, 3) have marginal projections (27), which respectively project on both sides in the chain transverse direction (9) and with which the laid-down energy guide chain (1) rests, in particular is held suspended, on shoulders (26) of the guide trough (22).

11. Processing machine according to one of claims 8 to 10, **characterized in that** the laid-down energy guide chain (1) rests on the bottom of the guide trough (22).

## Revendications

1. Chaîne de transport d'énergie (1) comportant plusieurs maillons de chaîne (2, 3) reliés entre eux de manière articulée, l'un des deux côtés de la chaîne de transport d'énergie (1) étant recouvert d'une bande de recouvrement (8) élastiquement flexible, qui est maintenue au moins sur certains, de préférence tous les maillons de chaîne intérieurs (2) et est guidée de manière coulissante dans la direction longitudinale (4) de la chaîne,
**caractérisée en ce**
**que** la bande de recouvrement (8) dépasse des maillons de chaîne (2, 3) au moins d'un côté, en particulier des deux côtés, dans la direction transversale (9) de la chaîne.

2. Chaîne de transport d'énergie selon la revendication 1, **caractérisée en ce que** la bande de recouvrement (8) est résistante à la lumière laser.

3. Chaîne de transport d'énergie selon la revendication 1 ou 2, **caractérisée en ce que** la bande de recouvrement (8) est formée par une bande d'acier à ressort.

4. Chaîne de transport d'énergie selon l'une des revendications précédentes, **caractérisée en ce que** des éléments de guidage (11) sont fixés, en particulier encliquetés, au moins aux maillons de chaîne intérieurs (2), sur lesquels la bande de recouvrement (8) est à la fois maintenue et guidée de manière coulissante dans la direction longitudinale (4) de la chaîne.

5. Chaîne de transport d'énergie selon la revendication 4, **caractérisée en ce que** les éléments de guidage (11) dépassent des maillons de chaîne (2, 3) des deux côtés dans la direction transversale (9) de la chaîne et enserrent les bords longitudinaux de la bande de recouvrement (8).

6. Chaîne de transport d'énergie selon l'une des revendications précédentes, **caractérisée en ce que** les maillons de chaîne (2, 3) présentent des saillies marginales (27) qui font saillie des deux côtés dans la direction transversale (9) de la chaîne pour reposer en suspension sur des épaulements (26) d'une goulotte de guidage (22).

7. Chaîne de transport d'énergie selon l'une des revendications précédentes, **caractérisée en ce que** les maillons de chaîne (2, 3) présentent chacun un profil creux (5) qui est ouvert dans la direction longitudinale (4) de la chaîne et le long duquel des lignes d'alimentation (6) sont guidées dans la direction longitudinale (4) de la chaîne.

8. Machine, en particulier machine d'usinage (21) pour l'usinage de pièces, comportant un composant de machine (24) mobile le long d'une goulotte de guidage (22) et comportant au moins une chaîne de transport d'énergie (1) recourbée, en particulier en U, selon l'une des revendications précédentes, qui relie le composant de machine mobile (24) à un autre composant de machine (25) et qui peut être déposée au moins partiellement dans la goulotte de guidage (22), le côté recouvert par la bande de recouvrement (8) formant le côté intérieur (7) de la chaîne de transport d'énergie recourbée (1) et la bande de recouvrement (8) étant au moins aussi large que la goulotte de guidage (22).

9. Machine d'usinage selon la revendication 8, **caractérisée en ce que** la bande de recouvrement (8) de la chaîne de transport d'énergie (1) déposée s'étend au-delà de la goulotte de guidage (22) des deux côtés dans la direction transversale (9) de la chaîne et repose en particulier sur des épaulements (26) de la goulotte de guidage (22).

10. Machine d'usinage selon la revendication 8 ou 9, **caractérisée en ce que** les maillons de chaîne (2, 3) présentent des saillies marginales (27) qui font saillie des deux côtés dans la direction transversale (9) de la chaîne et avec lesquelles la chaîne de transport d'énergie (1) déposée repose, en particulier est maintenue en suspension, sur des épaulements (26) de la goulotte de guidage (22).

11. Machine d'usinage selon l'une des revendications 8 à 10, **caractérisée en ce que** la chaîne de transport d'énergie (1) déposée repose sur le fond de la goulotte de guidage (22).
